# EUROPEAN PATENT APPLICATION

(11) **EP 0 616 407 A1**
(43) Date of publication of application: **21.09.1994**
(21) Application number: 93302010.9
(22) Date of filing: 17.03.1993
(51) Int. Cl.: H02J 7/00, G05F 1/59, H02M 3/07

(54) **Graded multi-voltage control circuit**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The object of the present invention is to provide an effective newly designed circuit which can output graded multi-voltage, and further combine with linear or chopped solid switch member so as to attain non-sparkle multi-voltage switching and low ripple-wave PWM voltage output of graded linear or chopped wave and further feedback the limited current or set voltage output adjustment function.

## Description

### Summary of the Invention

Because battery is portable and mobile, it is widely used for various kinds of appliances, such as electric vehicles, etc. But the kind of storage, or fuel, or thermal, or sun-power battery has physilcal basic voltage. Generally speaking, we shall choose its voltage and capacity by means of its multiple series and supply it in accordance with the need of load by means of graded voltage, or control it by serial linear members, or operate it by chopped wave switches. This is an efficient circuit design mainly to provide a multi-output graded multi-voltage, and further to connect with linar or chopped wave solid switch members so as to attain non-sparkle multi-voltage switching and graded voltage combining with linear voltage adjustment, or low ripple-wave PWM voltage output of graded voltage combining with chopped wave voltage adjustment. And "by means of linar adjustment or solid switch member of PWM adjusting control which is disposed serially in battery and diode and between their on-off switches of switch multi-voltage output, the low pressure becomes valley and high pressure of second section becomes peak for the circuit of linear continual adjustment and PWM adjustment of output voltage, and becomes the low ripple-wave voltage output or the slowly voltage-rising or slowly voltage-dropping output which forms between valley bottom voltage and peak and is controlled by adjustable linear, or PWM of it", and outputs the adjusting function by means of further feedback of limited currenct, or constant current and set voltage.

### Brief Description of the Drawings

FIG 1 is a view of two-knife and two-throw switch multiple series diode for multi-voltage switch according to an embodiment of the invention.

FIG 2 is a view of linear adjustment voltage wave of multi-voltage.

FIG 3 is a view of chopped wave adjustment voltage wave of multi-voltage.

FIG 4 is a view of multi-voltage switch circuit of two-knife and two-throw switch.

FIG 5 is a view of multi-votage switch circuit of single-knife switch.

FIG 6 is a view of multi-voltage switch composed of solid switch and diode.

FIG 7 is a view of linear adjustment voltage wave and graded basic voltage of multi-voltage.

FIG 8 is a view of chopped-wave adjustment voltage wave and graded basic voltage of multi-voltage.

FIG 9 is a circuit embodiment of an off-on switch for control over a commonly used solid switch member.

FIG 10 is a circuit embodiment of the off-on switch in FIG 15 which is replaced by multiple control switch additional contacts and output switch is replaced by serial control swtch additional contact points.

FIG 11 is a wave form diagram of linear ajustment output voltage in FIG 15.

FIG 12 is a wave form diagram of chopped wave ajustment output voltage in FIG 15.

FIG 13 is a circuit embodiment of a serial control switch replaced by two-knife two-throw switch.

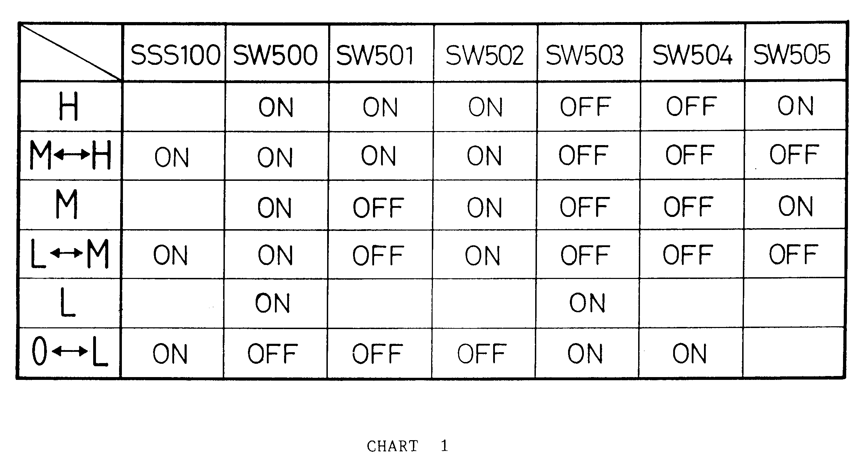

FIG 14 is a circuit embodiment of the off-on switch in FIG 19 which is replaced by multiple control switch additional contacts and output switch is replaced by serial control swtch additional contact points.

FIG 15 is the first economy circuit embodiment which has a linear or chopped wave adjustment function when it is beyond basic voltage.

FIG 16 is the second economy circuit embodiment which has a linear or chopped wave adjustment function when it is beyond basic voltage.

### Detailed Description of the Invention

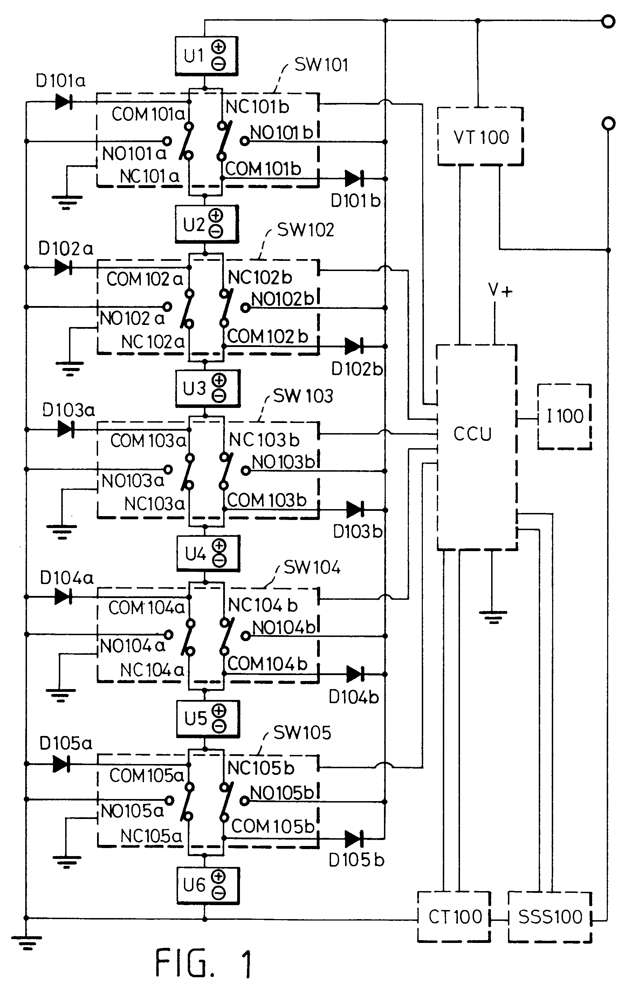

Now referring to FIG 1, a view of an embodiment of Conventionally Combined and graded Circuit of Multi-voltage Driven Circuit of Battery or Multiple Independent DC Power, by means of battery and serial two-throw (C) contact switch, it forms a multi-voltage output composed of alternative switch, and when outputting, it will make switch contact multiple series connect to segmented diode's two ends so as to eliminate diode's direct voltage reducing and thermal loss, and it can further combine with current inspection device and linear or switch-mode solid switch member, and combine with a central processing unit (CPU) to accept operation order of input device instruction so as to control electric-mechanical switch and solid switch member for adjusting output voltage current flow or adjusting the output constant voltage, or set the limits of output current value, or constant current and "by means of linar adjustment or solid switch member of PWM adjusting control which is disposed serially in battery and diode and between their on-off switches of switch multi-voltage output, the low pressure becomes valley and high pressure of second section becomes peak for the circuit of linear continual adjustment and PWM adjustment of output voltage, and becomes the low ripple-wave voltage output which forms between valley bottom voltage and peak and is controlled by adjustable linear, or PWM of it", or when electric-mechanical switch is turned on, the time of operation of solid switch (on) is suspended at the on position, when it is turn off, the operation time of solid switch (off) precedes the electric-mechanic to cut off power supply and reach the non-sparkle on-off electric-mechanical switches. This function further comprises the non-sparkle turning on/off of positive/negative polar on/off switch of output side.

The structure and operation of the embodiment are disclosed as follows:
two sets or more than two sets of battery units of same voltage, same capacity, or at least of same voltage, including linear or quadratic storage battery, or sun-power battery, or fuel battery, or thermal battery, by means of more than two-knife manual two-throw switch, or drum switch, or electric-mechanical switch members, such as magnetic or mechanical operated relay, etc., which are disposed between battery units and tends to be in direct-polar series with battery, said battery includes a single or multiple series, or multipled, or multi pled series to be a battery unit; common contacts of two sets of different knife of two-knife switch are in replacement series with the open contact; that is, the common contact of knife A is connected to close contact of knife B, and the common contact of knife B is connected to close contact of knife A; and each connected contact is respectively connected to positive and negtive pole of battery unit; each commom contact of switch is connected to the positive pole of the knife unit, and its common contact is in direct multipled series with diode and connects to its open contact and further to the first battery unity and output positive end; common contact of each switch is connected to the negtive end of knife unit, its common contact and open contact are in direct series with diode, and is connected from open contact to the negtive pole of the last battery and outputs negtive end; said electric-mechanical switch member can be composed of directly manual switch, or megnetic driven, or driven by other mechanism.

Said systematic operation has the following function and advantages:
1. According to the common divisor symmetric to on/off switch, added to wholy open or wholy close contacts, it can provide multiple choice for multi-voltage output.
2. When output, all multiple contacts of diode are tended to close so that they can eliminate direct pressure drop and thermal loss of diode.
3. When turned on/off, diode provides linear graded voltage for lessening switch voltage, and used as transient current path to prolong the life of switch contact.
4. Power unit on-off switch or solid switch member can be further selected to be two-phase conductive member or deviced in inverse-direction at the same time so as to provide for control over the input voltage and current, or the serial and multiple situation of on-off power unit when it is inversely input from the output end, and for control over solid switch member (if there is one) so as to fit the situation of external input power.

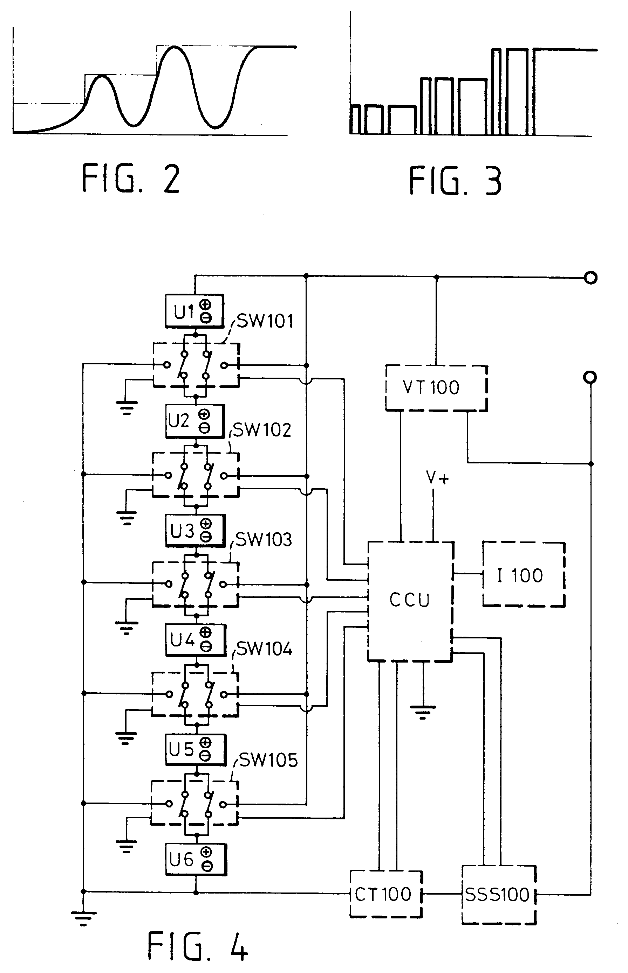

Take the embodiment in FIG 1 for example, composed of switch SW101-SW105 between six sets of battery units U1-U6 and five intermingled battery units, each switch has diode D101a-105a according to said principle, its input end multiples to pass negative output end; D101b-105b output end multiples eo pass positive output end; when common contact and close contact of operating switch SW101-105 are tended to close , all battery units are multipled and in series with output voltage which is 6 x EB; that is, every three sets of battery units tend to be serialized and then multiplized; when SW102 and SW104 are controlled to be common contact and be converted to connect with open contact, output voltage will be 2 x EB; that is, every two battery units are serialized and then multiplized; when switch SW101-SW105 are controlled to be common contact and be converted to connect with open contact, output voltage will be EB; that is, battery unit U1-U6 are multiplized. If we use 24 sets of voltage to construct for battery units, we get multi-voltage grades of 1 x EB, 2 x EB, 3 x EB, 4 x EB, 6 x EB, 8 x EB, 12 x EB, 24 x EB; If we use 36 sets of voltage unit, we get 1 x EB, 2 x EB, 3 x EB, 4 x EB, 6 x EB, 9 x EB, 12 x EB, 18 x EB, 36 x EB, all the graded multi-voltage output is formed by battery unit multiple value according to the common divisor of battery units, others are analog of this example and need not to be mentioned here. Said switch unit can be manual, or be controlled by a central control unit (CCU) and directory input unit I 100 soa s to control said switch unit to turn multi-voltage on/off; or to further serialize linear or switch open solid switch member SSS 100 at the output terminal so as to adjust and control the electric-mechanical switch operation situation and solid switch work situation which is relative to input value, the situations are as follows:
directly by means of linear solid switch member, trim the output of graded voltage or by means of controlling electric-mechanical switch, make the output higher than the needed output value, and then use the central control unit (CCU) to control the driven current of linear solid switch member so as to get the adjustment of linear output voltage; referring to FIG 2, if we want to trim the adjustment of a large voltage larger than a unit of battery units voltage potential grade, we can do it by means of electric-mechanical switch unit and its thermal loss will be reduced; directly by means of switch solid switch member, trim the output of graded voltage or by means of controlling electric-mechanical switch, make the output higher than the needed output value, and then use the central control unit (CCU) to control the driven pulse range of switched solid switch member so as to get the adjustment of average output voltage; referring to FIG 3, if we want to trim the adjustment of a large voltage larger than a unit of battery units voltage potential grade, we can do it by means of electric-mechanical switch unit, because it has graded basic voltage, ripple-wave value is lower than that of wave-loaded adjustment of the whole voltage directly.

We can further serialize an inspection device CT100 to the output circuit so as to inspect its output current value feeding back to central control unit (CCU), according to the input unit instruction or the preset value in CCU, and control mutually and relatively electric-mechanical switch and solid switch, and at the output terminalit multiplized inspection device VT100 soa s to inspect its output voltage value which feeds back too CCU, and in accordance with instructions of input unit, or with the mutual control of solid switch and electric-mechnical switch of preset value in CPU. Similar to the conventional steady voltage circuit, because this circuit has a standard potential, in addition to adjusting the voltage change caused by unsteady load, it can adjust loaded side voltage change caused by unsteady power voltage. For example, voltage drops in a battery because storage is reduced, or voltage is unsteady in a sun-power battery because sunlight amount is changed.

Besides, the most important thing is that by means of the following controlled order, we may achieve the following functions: when switching electric-mechanic switch, at the "on " position, solid switch (on) operation time suspends after the electric-mechanic switch, at the "off" position, solid switch (off) operation time precedes electric-mechanic switch to turn the power off so as to attain non-sparkle on/off electric-mechanic switch, this switch further includes non-sparkle switching of positive and negative polar on/off switch of output side.

Said set operation order includes mode of manual, electric magnetic, mechanic, and flow control, according to said switch operation order, it may be locked up or delayed by mechanic order, or order locked up or delayed by circuit.

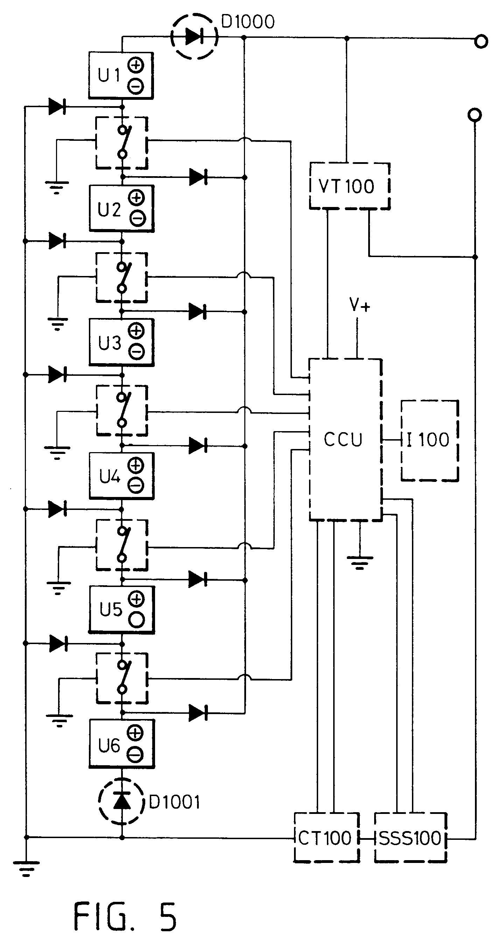

This kind of circuit, when put into practical uses, if power capacity is lower, diode can be omitted, too, and two-knife two and two-throw switch can directly turn on/off other function. The same as the embodiment in FIG 1, when using, it can further connect to solid switch member and output voltage current inspection member and by means of input unit and central control unit CCU, it has various function. FIG 4 is a view of multi-voltage switch circuit of two-knife and two-throw switch.

If circuit efficiency is available and application is limited by space, we can connect single-knife single-throw switch to diode so as to produce on/off switching multi-voltage output function, in application we can further connect solid switch member and output voltage current inspection member and by means of input unit, CCU produces various same function. FIG 5 is a view of multi-voltage switch circuit of single-knife switch. In FIG 5, D1000 and D1001 are diodes for average pressure used to provide battery multipled for average voltage, can be disposed on it when needed.

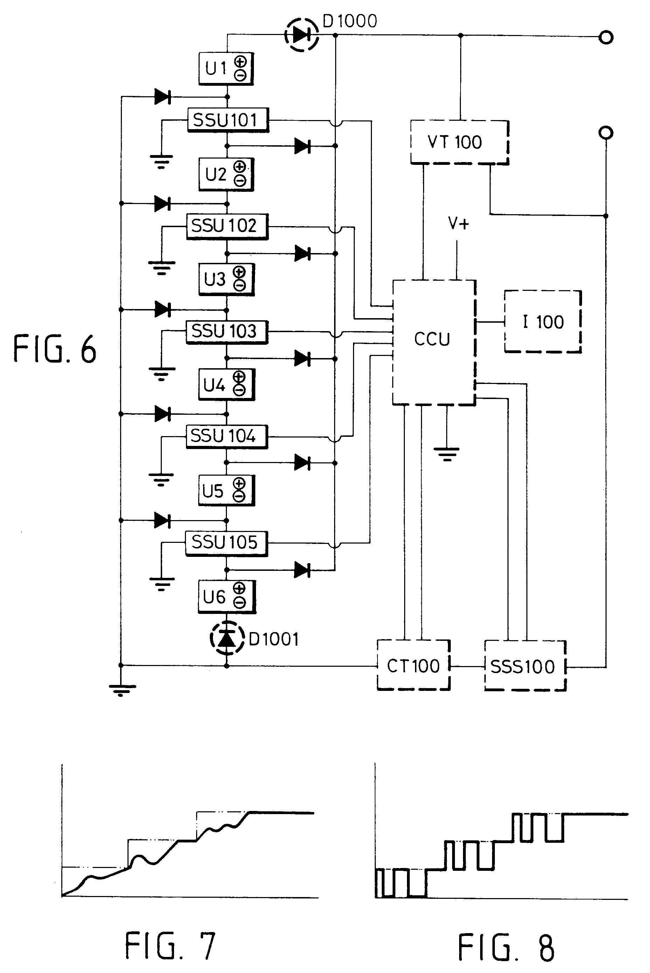

Moreover, electric-mechanic switch serialized between voltage units in said circuit can be replaced by solid switch member, and connect to diode so as to form multi-voltage output. Referring to FIG 6, a view of multi-voltage switch composed of solid switch and diode, in this circuit its switching function is the same as that of FIG 5, in FIG 6, D1000 and D1001 are diodes for average pressure used to provide battery multipled for average voltage, can be disposed on it when needed, because switch member which is serialized between battery units can further connect to CCU and input unit and output voltage current inspection member to form continual adjustment or output voltage and current control between said graded voltage. In this kind of design, we can further dispose electric-mechanic switch contact on both sides of solid switch member to form SSU101--SSU105. By means of following operation order, it can reduce voltage drop, loss, and heat; the operation order of this circuit is as follows:
At "on" position, the (on) operation of solid switch is before electric-mechanic switch.

At "off" position, the (off) operation of solid switch is after electric-mechanic switch.

When solid switch is used as linear control or PWM switch control, electric-mechanic switch which is serialized to it will not operate; said solid switch and electric-mechanic switch can be controlled by CCU, or manually, or electric-magnetically, or mechanically, or fluid dynamically controlled, switch operation situation further comprises:
By controlling electric-mechanic switch, it enables output to surplus the needed output value, and then CCU controls driven current of each linear solid switch member, or by means of control over the battery unit which has has higher potential grade between mutually serialized and multiplized battery units, it provides basic voltage of battery units mutually serialized to solid switch member of resistance so as to attain linear output voltage adjustment. Referring to FIG 7, if the adjustment of a large voltage of a voltage potential grade is needed, electric-mechanic switch can achieve it so that heat loss will be less;

By operating electric-mechanic switch, it enables the output surplus the needed output value, and then CCU controls it and each solid switch member outputs chopped current, or controls driven current of each linear solid switch member, or by means of control over the battery unit which has has higher potential grade between mutually serialized and multiplized battery units, it provides basic voltage of battery units mutually serialized to solid switch member of driven pulse range so as to attain average output voltage adjustment. For example, CCU controls SSU 101, 102, 104, 105, which are all mutually connected and SSU 103 is controlled by chopped wave and its output is as following FIG 8, if we want to trim the adjustment of a large voltage larger than a unit of battery units voltage potential grade, we can do it by means of electric-mechanical switch unit, because it has graded basic voltage, ripple-wave value is lower than that of ave-loaded adjustment of the whole voltage directly;
"If said linear or chopped wave control ripple range and graded basic voltage are composed of battery unit of equal voltage, in order to seek an average of electric consumption, CCU can further be used to control unit CCU which periodically alternates to control its solid switch member so as to make battery alternate basic voltage supply and adjusting range, or chopped wave pluse to have an average electric consumption."

We can further serialize an inspection device CT100 to the output circuit so as to inspect its output current value feeding back to central control unit (CCU), according to the input unit instruction or the preset value in CPU, and control mutually and relatively electric-mechanical switch and solid switch, and at the output terminalit multiplized inspection device VT100 soa s to inspect its output voltage value which feeds back too CCU, and in accordance with instructions of input unit, or with the mutual control of solid switch and electric-mechnical switch of preset value in CCU. Similar to the conventional steady voltage circuit, because this circuit has a standard potential, in addition to adjusting the voltage change caused by unsteady load, it can adjust loaded side voltage change caused by unsteady power voltage. For example, voltage drops in a battery because storage is reduced, or voltage is unsteady in a sun-power battery because sunlight amount is changed.

Besides, said switch member can also just function as a switch and add a serialized SSS100 of solid switch member to the circuit and functions as a constant adjusting component between graded voltage of linear and chopped wave control; that is, "by means of linar adjustment or solid switch member of PWM adjusting control which is disposed serially in battery and diode and between their on-off switches of switch multi-voltage output, the low pressure becomes valley and high pressure of second section becomes peak for the circuit of linear continual adjustment and PWM adjustment of output voltage, and becomes the low ripple-wave voltage output or slowly voltage-rising or slowly dropping, which forms between valley bottom voltage and peak and is controlled by adjustable linear, or PWM of it".

The above-described embodiments are battery units which have many advantages. For example, their control over the circuits is suitable for multi-voltage control of multiple independent DC power of alternate and commutation, elimination of sparkles, and constant adjustment between feedback control and linear or chopped wave graded voltage of voltage and current; in application, individual and independent DC voltage unit can be considered and used as a battery unit.

According to each said application theory, in practical uses, switch member between each battery unit can also use electric-mechanic switch and solid switch member in accordance with needed function and economy.

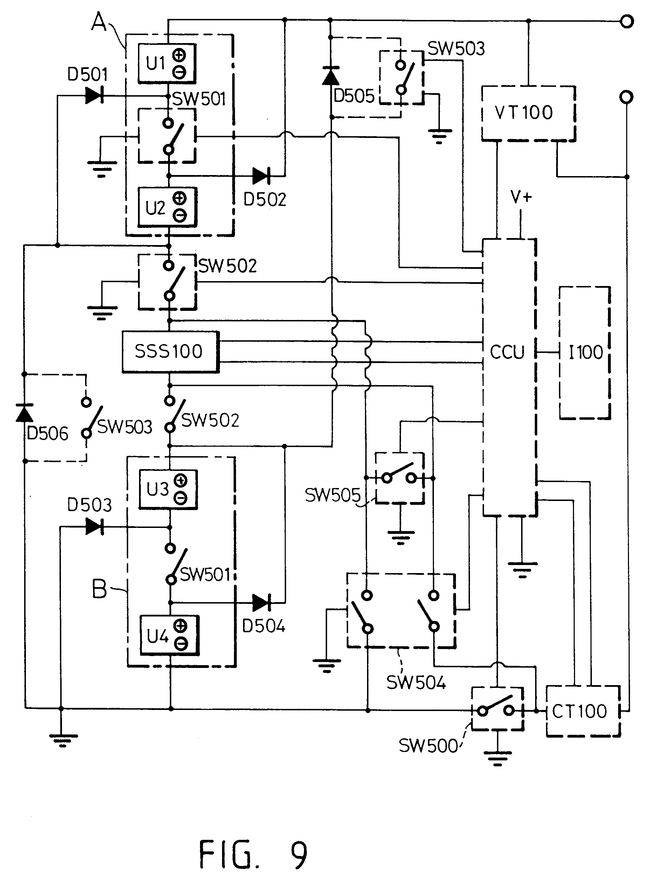

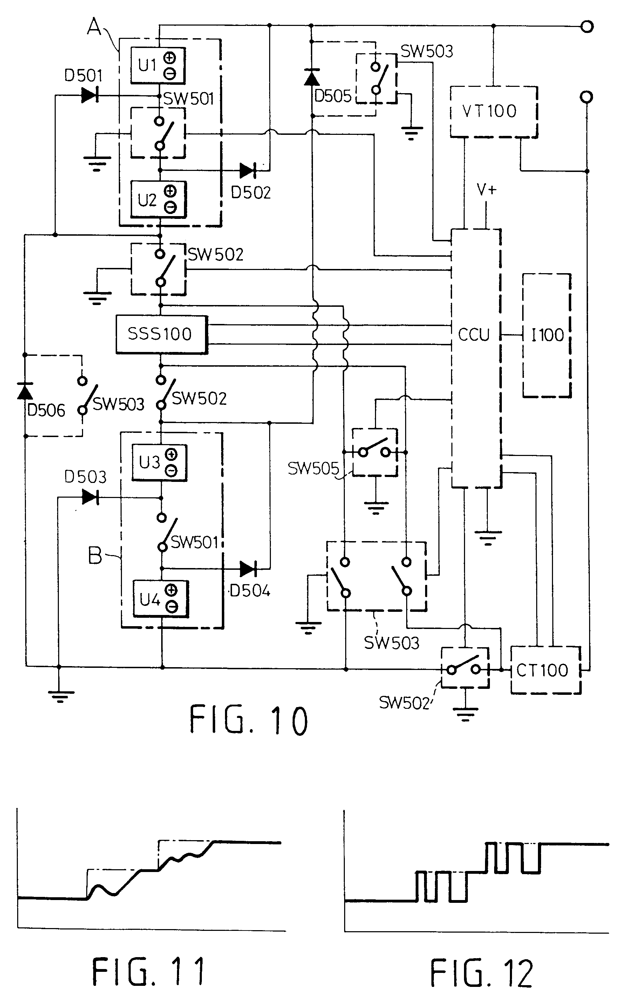

If said embodiments determine to use single unit solid switch member for linear or chopped voltage control output between each gradient voltage (as shown in FIG 7,8), they can attain this goal by means of circuit shown in FIG 9. Their main structures are as follows:
two sets or more than two sets of power units of same voltage and same capacity, or at least of same voltage, and a set of commonly serialized solid switch member, whereassolid switch member is serialized in the middle section; that is, the number of power units serialized in front section and rear section is the same;
constantly open serial switched are disposed on each serial member, serial switch member of its both ends are both switches contact points of the same set of synchronously driven serial switches, (or not the same synchronously driven serial switches), the contact point relationship of forward and backward serialized switches of power unity, having synchronous relationship;
solid switch has on-off switch for selection of output control and for output switch serialized at output end; that is, when all power units tend to be multiplized, solid switch is turned on or off to provide replacement of output switch and to control and adjust output current for linear or chopped wave voltage; if linear or chopped wave adjustment functions of output gradient voltage do not invlove all power units, and tend to be in serialized situation, its output will be as illustrated in FIG 11,12, then said on-off switch can be viewed as necessary to make diverse choice -- whether it will be disposed or it will be replaced by adding serial switch contact points between solid switch and power unit;
each power unit which is respectively devided into front section and rear section by solid switch has a polar end which directly connects through a diode or switch to two output ends of different polarity, and another polar end of power unit in front and rear section is serialized through diode or switch, that which belongs to the front section is commonly serialized and then guided through diode or its serialized control switch to the directly connected output end of rear section, that which belongs to the front section is commonly serialized and then guided through diode or its serialized control switch to the directly connected output end of front section;
axiliary switch is serialized to thwo power connecting enda of solid switch member, when solid switch is in completely conducted situation, the auxiliary switch will close to eliminate voltage drop and thermal loss, this switch is deviced for diverse choice;
CCU unit, input control, set device, voltage and current control device can be used to control said members for the choice of output voltage and current or choice of limit voltage, limit current, constant current, slowly rising, slowly dropping voltage output.

As illustrated in FIG 9, a circuit embodiment of an off-on switch for control over a commonly used solid switch member, the single unit solid switch member of the circuit can adjust linear and chopped wave between each gradient voltage, in this FIG, two or more than two sets of power units U1-U4 of same voltage, same capacity, or at least of same voltage for the supply of gradient on-off switch power source, including : [1]. U1, U4 serial for EB output; [2]. U1, U2tend to be serialized and then multiplized with series U3, U for 2x EB output; [3]. U1-U4 are serialized for 4xEB output; in the circuit among each power unit there disposed a control switch SW 501 and SW502, among the negative end of power units U1, U2 there mutiplized negative end of current-conducting diode D501, U2, and among output negative ends is multiplized another current-conducting diode D506, both ends of the diode can be further serialized to a switch set SW503 which will close when power units are multiplized so as to eliminate thermal loss of diode D506, a diode D503 is also multiplized between power unit U3 and an output negative end; another diode D504 is multiplized between positive ends of power units U3 and U4; another diode D505 is multiplized between positive end of power units U4 and positive end of output; both ends of these two diodes can also be multiplized to switches SW503 so that it can close when all power units are multiplized and that it can eliminate the thermal loss of diode D505, a diode D502 is also multiplized between power unit U2 and an output positive end; between serial points of half set of power units there serialized a solid switch SSS 100 and at the independent constant open contact points of two sets of SW502, two power ends of solid switch are respectively serialized to output two independent constant open contact point sets of control switch SW504, and then respectively connect to both contact ends of output switch SW500, output switch SW500 is serialized to an output circuit, its relation with solid switch lies in that when it adjusts its linear and chopped wave between gradient voltages to fit the operation of SSS100, SW502, SW503, it turns on and turns off output switch SW500 so as to let output current pass by, especially when power units tend to low-pressedly multiplized all, and when solid switch member adjusts output power, SW500 tends to open its circuit, and output of solid switch controls to turn on and off the switch SW504, in output circuit, polar series solid switch initiates linear or chopped wave output of low-pressure section; but in low-pressure section, it continually initiates the largest amount of output; output switch SW500 can be further closed to eliminate the loss of pressure-drop, if this function is not needed, output switch SW500 can be replaced by a set of constant open contact point which is added from series control switch SW502, and output switch 504n of the solid switch can also be replaced by two sets of independent constant open contact point added from series on-off switch 503.(as shown in FIG 10). Besides, if auxiliary switch SW505 which is further added and multiplized to both contact ends of SSS100, it can be provided to close contact points of the auxiliary switch when solid switch SSS100 is completely conducted in every gradient voltage range so as to eliminate pressure-drop and thermal loss.

Said circuit is serially and multiply switched among each power unit so as to gain multiple voltage output, so the number of pwer units can be enlarged to gain more gradient multiple voltage output, its basic theory of switch can be fulfilled according to the methods illustrated in FIG 1, 4, 5, the only difference lies in that the series sets of its power units are averagely divided into two symmetric series sets A, B, one end of power unit of each set is respectively connected to both output ends of different polarity by means of diode or switch, another end of each set is respectively connectewd both ends of solid switch SSS100 which is serialized to the independant constant open contact points of an on-off switch, and then is connected to the same polar ends of the same set of independant power units by means of diode or on-off switch, as illustrated in FIG 9, the negative end of A set is connected to negative output end or additional switch SW 503 by means of conductive diode D506 so as to connect to output negative end, when power unit initiates parallel low-pressure output, and connects to the negative end of the same set U1 by means of diode D501, the negative end of A set is connected to negative output end or additional switch SW 503 by means of conductive diode D505 so as to connect to output negative end, when power unit initiates parallel low-pressure output, and connects to the negative end of the same set U4 by means of diode D504; in practical uses, diode or control switch or both of them, can be freely selected to be used as current-conducting elements among power units, if two-phase current-conducting element is selected, the circuit structure can supply power or initiate inverse-phase input of charge, when two-phase solid switch is also selected, it can further adjust input liear or chopped wave;
Chart 1 shows the states of each switch in FIGS. 9 and 10.

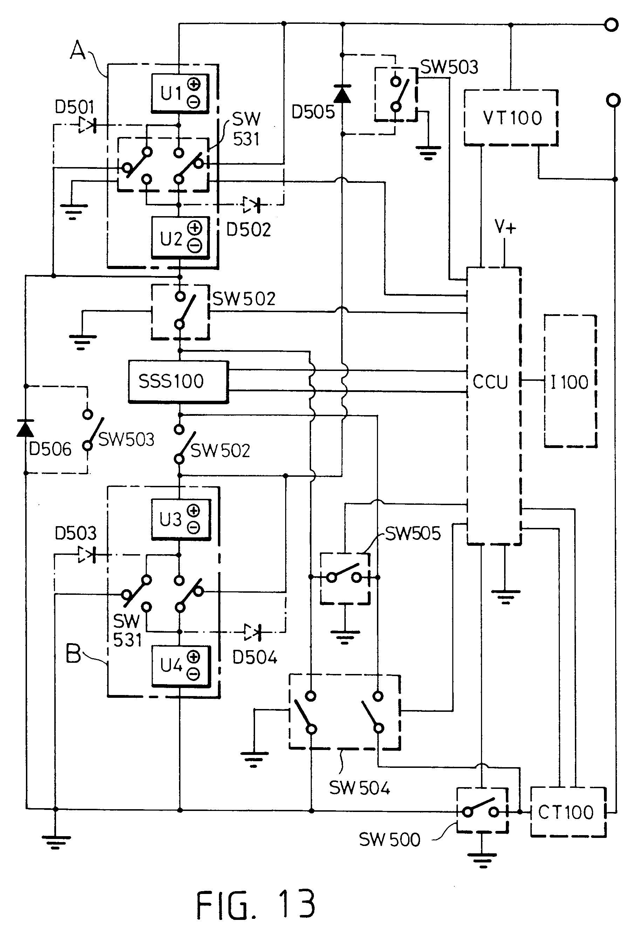

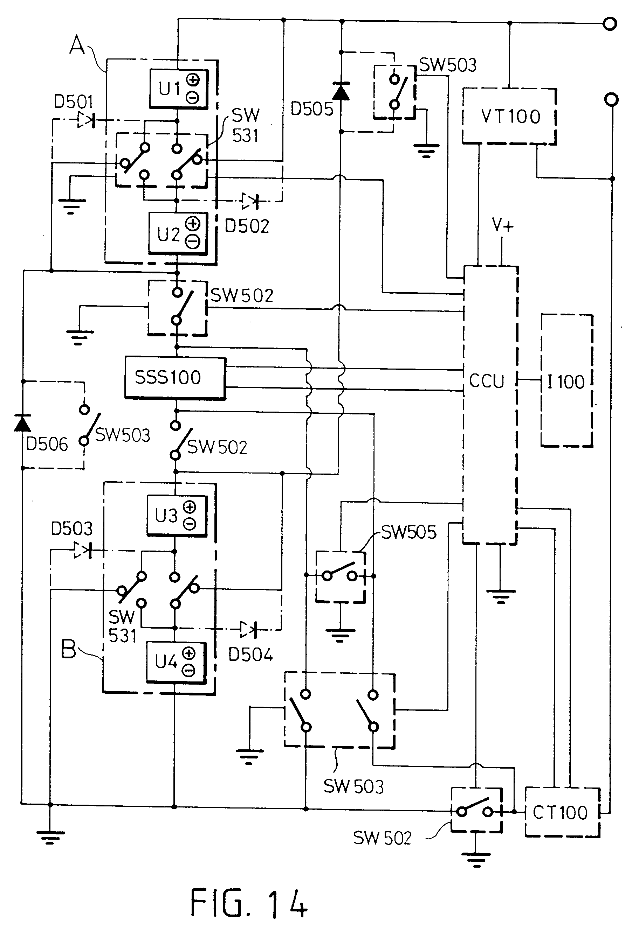

As illustrated in FIG 9, an embodiment of the invention in operation, if output current is larger, diode will lose its power and become hot, because of directional pressure-drop. In order to avoid the thermal loss and pressure-drop, inital control switch SW501 can be replaced by the same two-knife two-throw control switches SW531, as shown in FIG 13, and if there is no request for output adjustment when low-pressure parallel is output, as shown in 20, SW 500 is replaced by switch SW502, and SW 503 replaces SW 504, if it is necessary the embodiment in FIG 13, 14 can add parallel branch current diode between common contact points and constant open contact points of two-knife two-throw switch, as shown in FIG 14, and can reduce sparks when it is cut off, its theory is the same as the embodiment in FIG 1.

Said circuit is used for sparkless on-off order control, and used for adjusting voltage or current control. (including slow pressure-increasing or slow presasure-reducing, or constant voltage, or slow current increasing, or slow current-reducing, or constant current, or inspection limit current), each function is the same as said embodiment, and do not need to be mentioned again hereafter.

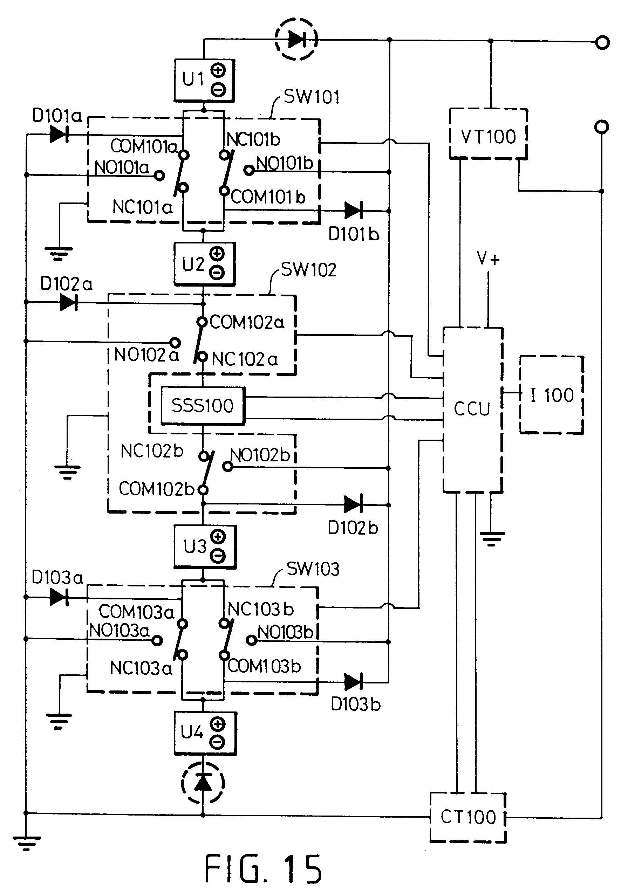

Besides, as far as economy is concerning, economy circuit, as illustrated in FIG FIG 15-16, forms Multi-voltage Driven Circuit of Battery or Multiple Independent DC Power;
As illustrated in FIG 15, which is based on FIG 14, two-knife two-throw switch replaces SW 502 in FIG 14, and omit SW 503 so as to multiplized respectively both input ends to the divide diode which is connected to positive and negative polars of power units, its theory of operation is the same as FIG 1, however, two ends of solid switch member are serialized to synchronous switches SW102 which are serialized to the middle section of power units.

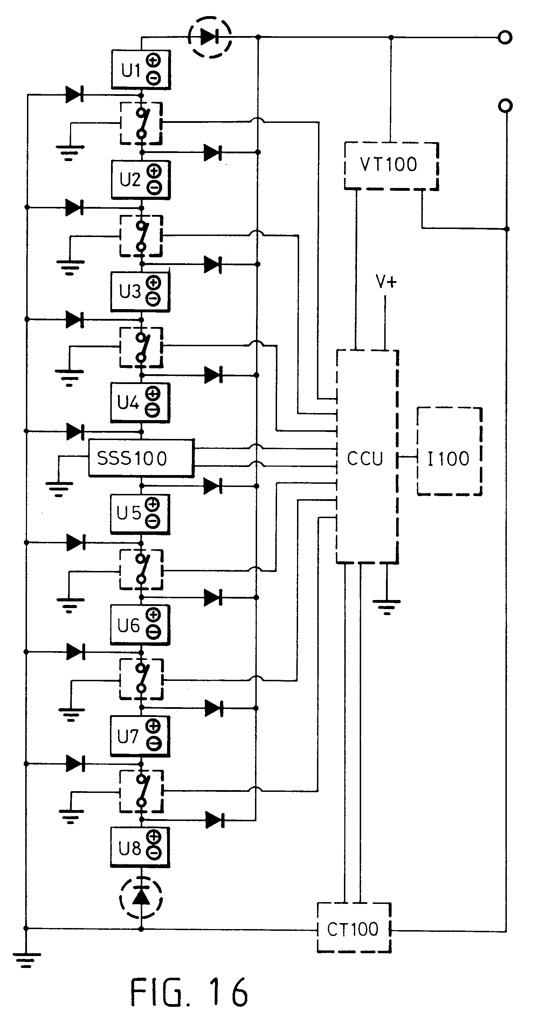

As illustrated in FIG 16, another embodiment of the economic circuit, and an extension of FIG 5, the functions of its circuits are the same as illustrated in FIG 5, except that the middle section of power units has solid switch member SSS100 for the adjustment of linear or chopped voltage.

In conclusion, object of the present invention is to provide an effective newly designed circuit which can output graded multi-voltage, and further combine with linear or chopped solid switch member so as to attain non-sparkle multi-voltage switching and low ripple-wave PWM voltage output of graded linear or chopped wave and further feedback the limited current or set voltage output adjustment function, it is so unique, newly designed, and practical, please examine it in accordance with the law.

## Claims

1. Conventionally Combined and Graded Multi-voltage Control Circuit comprising a unique highly effective circuit design mainly to provide a multi-output graded multi-voltage, and (1) further to connect with linar or chopped wave solid switch members so as to attain non-sparkle multi-voltage switching, (2) to use two-phase solid member for output-input linear or chopped voltage, or current auto-control element; (3) to combine with bridge switch circuit for synchronous output, and change multi-voltage DC into gradient voltage wave form of approximate sine (or other wave forms) to output; or (4) and change multi-voltage DC into gradient voltage wave form of approximate sine or pulse of other wave forms to output; or (5) and graded voltage combining with linear voltage adjustment, or low ripple-wave PWM voltage output or input of graded voltage combining with chopped wave voltage adjustment, and by means of linar adjustment or solid switch member of PWM consecutive adjusting control which is disposed serially in battery and diode and between their on-off switches of switch multi-voltage output, the low pressure becomes valley and high pressure of second section becomes peak for the circuit of linear continual adjustment and PWM adjustment of output voltage, and becomes the low ripple-wave voltage output which forms between valley bottom voltage and peak and is controlled by adjustable linear, or PWM of it, and outputs the adjusting function by means of further feedback of limited currenct and set voltage, its structure and main characteristics are as follows;
by means of battery and serial two-throw (C) contact switch, it forms a conventionally combined and graded multi-voltage output composed of alternative switch, and when outputting, it will make switch contact multiple series connect to segmented diode's two ends so as to eliminate diode's direct voltage reducing and thermal loss, and it can further combine with current inspection device and linear or switch-mode solid switch member, and combine with a central control unit (CCU) to accept operation order of input device instruction so as to control electric-mechanical switch and solid switch member for adjusting the output voltage, or set the limits of output current value, and "by means of linar adjustment or solid switch member of PWM adjusting control which is disposed serially in battery and diode and between their on-off switches of switch multi-voltage output, the low pressure becomes valley and high pressure of second section becomes peak for the circuit of linear continual adjustment and PWM adjustment of output voltage, and becomes the low ripple-wave voltage output or the slowly voltage-rising or slowly voltage-dropping output which forms between valley bottom voltage and peak and is controlled by adjustable linear, or PWM of it", and outputs the adjusting function by means of further feedback of limited current or constant current and set voltage, or when electric-mechanical switch is turned on, the time of operation of solid switch (on) is suspended at the on position, when it is turned off, the operation time of solid switch (off) precedes the electric-mechanic to cut off power supply and reach the non-sparkle on-off electric-mechanical switches, this function further comprises the non-sparkle turning on/off of positive/negative polar on/off switch of output side.

2. As claimed in claim 1, Conventionally Combined and Graded Multi-voltage Control Circuit further comprising;
two sets or more than two sets of battery units of same voltage, same capacity, or at least of same voltage, including linear or quadratic storage battery, or sun-power battery, or fuel battery, or thermal battery, by means of more than two-knife manual two-throw switch, or drum switch, or electric-mechanical switch members, such as magnetic or mechanical operated relay, etc., which are disposed between battery units and tends to be in direct-polar series with battery, said battery includes a single or multiple series, or multipled, or multipled series to be a battery unit; common contacts of two sets of different knife of two-knife switch are in replacement series with the open contact; that is, the common contact of knife A is connected to close contact of knife B, and the common contact of knife B is connected to close contact of knife A; and each connected contact is respectively connected to positive and negtive pole of battery unit; each commom contact of switch is connected to the positive pole of the knife unit, and its common contact is in direct multipled series with diode and connects to its open contact and further to the first battery unity and output positive end; common contact of each switch is connected to the negative end of knife unit, its common contact and open contact are in direct series with diode, and is connected from open contact to the negative pole of the last battery and outputs negative end; said electric-mechanical switch member can be composed of directly manual switch, or megnetic driven, or driven by other mechanism; Said systematic operation has the following function and advantages:
[1]. According to the common divisor symmetric to on/off switch, added to wholy open or wholy close contacts, it can provide multiple choice for multi-voltage output;
[2]. When output, all multiple contacts of diode are tended to close so that they can eliminate direct pressure drop and thermal loss of diode;
[3]. When turned on/off, diode provides linear graded voltage for lessening switch voltage, and used as transient current path to prolong the life of switch contact;
[4]. Power unit on-off switch or solid switch member can be further selected to be two-phase conductive member or inverse-phase device so as to provide for control over the input voltage and current, or the serial and multiple situation of on-off power unit when it is inversely input from the output end, and for control over solid switch member (if there is one) so as to fit the situation of external input power.

3. As claimed in claim 2 Conventionally Combined and Graded Multi-voltage Control Circuit, wherein said switch unit can be manual, or be controlled by a central control unit (CCU) and input unit I100 so as to control said switch unit to turn multi-voltage on/off; or to further serialize linear or switch open solid switch member SSS 100 at the output terminal so as to adjust and control the electric-mechanical switch operation situation and solid switch work situation which is relative to input value, the situations are as follows:
directly by means of linear solid switch member, trim the output of graded voltage or by means of controlling electric-mechanical switch, make the output higher than the needed output value, and then use the central control unit (CCU) to control the driven current of linear solid switch member so as to get the adjustment of linear output voltage; if we want to trim the adjustment of a large voltage larger than a unit of battery units voltage potential grade, we can do it by means of electric-mechanical switch unit and its thermal loss will be reduced;
directly by means of switch solid switch member, trim the output of graded voltage or by means of controlling electric-mechanical switch, make the output higher than the needed output value, and then use the central control unit (CCU) to control the driven pulse range of switched solid switch member so as to get the adjustment of average output voltage; if we want to trim the adjustment of a large voltage larger than a unit of battery units voltage potential grade, we can do it by means of electric-mechanical switch unit, because it has graded basic voltage, ripple-wave value is lower than that of wave-loaded adjustment of the whole voltage directly.

4. As claimed in claim 2, Conventionally Combined and Graded Multi-voltage Control Circuit wherein the circuit can further serialize an inspection device CT100 to the output circuit so as to inspect its output current value feeding back to central control unit (CCU), according to the input unit instruction or the preset value in CCU, and control mutually and relatively electric-mechanical switch and solid switch, and at the output terminalit multiplized inspection device VT100 so as to inspect its output voltage value which feeds back to CCU, and in accordance with instructions of input unit, or with the mutual control of solid switch and electric-mechnical switch of preset value in CCU. Similar to the conventional steady voltage circuit, because this circuit has a standard potential, in addition to adjusting the voltage change caused by unsteady load, it can adjust loaded side voltage change caused by unsteady power voltage; for example, voltage drops in a battery because storage is reduced, or voltage is unsteady in a sun-power battery because sunlight amount is changed.

5. As claimed in claim 2, Conventionally Combined and Graded Multi-voltage Control Circuit, wherein the circuit and its interface circuit, by means of the following controlled order, may achieve the following functions: when switching electric-mechanic switch, at the "on " position, solid switch (on) operation time suspends after the electric-mechanic switch, at the "off" position, solid switch (off) operation time precedes electric-mechanic switch to turn the power off so as to attain non-sparkle on/off electric-mechanic switch, this switch further includes non-sparkle switching of positive and negative polar on/off switch of output side; said set operation order includes mode of manual, electric magnetic, mechanic, and flow control, according to said switch operation order, it may be locked up or delayed by mechanic order, or order locked up or delayed by circuit.

6. As claimed in Claim 2, Conventionally Combined and Graded Multi-voltage Control Circuit, wherein on/off switch of multi-voltage can also be directly formed by a two-knife two-throw switch or one-knife one-throw combined with diode which can output switching multi-voltage.

7. As claimed in Claim 2, Conventionally Combined and Graded Multi-voltage Control Circuit, wherein on/off switch of multi-voltage can also be replaced by a solid switch member and combined with diode so as to form a multi-voltage output.

8. As claimed in claim 2, Conventionally Combined and Graded Multi-voltage Control Circuit, wherein solid switch member for switch voltage output can further dispose electric-mechanic switch contact on both sides of solid switch member to form SSU101--SSU105; by means of following operation order, it can reduce voltage drop, loss, and heat; the operation order of this circuit is as follows:
at "on" position, the (on) operation of solid switch is before electric-mechanic switch;
at "off" position, the (off) operation of solid switch is after electric-mechanic switch;
when solid switch is used as linear control or PWM switch control, electric-mechanic switch which is serialized to it will not operate; said solid switch and electric-mechanic switch can be controlled by CCU, or manually, or electric-magnetically, or mechanically, or fluid dynamically controlled, switch operation situation further comprises:
by controlling electric-mechanic switch, it enables output to surplus the needed output value, and then CCU controls driven current of each linear solid switch member, or by means of control over the battery unit which has has higher potential grade between mutually serialized and multiplized battery units, it provides basic voltage of battery units mutually serialized to solid switch member of resistance so as to attain linear output voltage adjustment. Referring to FIG 7, if the adjustment of a large voltage of a voltage potential grade is needed, electric-mechanic switch can achieve it so that heat loss will be less;
by operating electric-mechanic switch, it enables the output surplus the needed output value, and then CCU controls it and each solid switch member outputs chopped current, or controls driven current of each linear solid switch member, or by means of control over the battery unit which has has higher potential grade between mutually serialized and multiplized battery units, it provides basic voltage of battery units mutually serialized to solid switch member of driven pulse range so as to attain average output voltage adjustment;
if we want to trim the adjustment of a large voltage larger than a unit of battery units voltage potential grade, we can do it by means of electric-mechanical switch unit, because it has graded basic voltage, ripple-wave value is lower than that of wave-loaded adjustment of the whole voltage directly;
if said linear or chopped wave control ripple range and graded basic voltage are composed of battery unit of equal voltage, in order to seek an average of electric consumption, CCU can further be used to control unit CCU which periodically alternates to control its solid switch member so as to make battery alternate basic voltage supply and adjusting range, or chopped wave pluse to have an average electric consumption.

9. As claimed in claim 2, Conventionally Combined and Graded Multi-voltage Control Circuit, wherein graded voltage combining with linear voltage adjustment, or low ripple-wave PWM voltage output or input of graded voltage combining with chopped wave voltage adjustment, and by means of linar adjustment or solid switch member of PWM consecutive adjusting control which is disposed serially in battery and diode and between their on-off switches of switch multi-voltage output, the low pressure becomes valley and high pressure of second section becomes peak for the circuit of linear continual adjustment and PWM adjustment of output voltage, and becomes the low ripple-wave voltage output which forms between valley bottom voltage and peak and is controlled by adjustable linear, or PWM of it.

10. As claimed in claim 2, Conventionally Combined and Graded Multi-voltage Control Circuit, wherein two sets or more than two sets of power units of same voltage and same capacity, or at least of same voltage, and a set of commonly serialized solid switch member, whereas solid switch member is serialized in the middle section; that is, the number of power units serialized in front section and rear section is the same;
constantly open serial switched are disposed on each serial member, serial switch member of its both ends are both switches contact points of the same set of synchronously driven serial switches, (or not the same synchronously driven serial switches), the contact point relationship of forward and backward serialized switches of power unity, having synchronous relationship;
solid switch has on-off switch for selection of output control and for output switch serialized at output end; that is, when all power units tend to be multiplized, solid switch is turned on or off to provide replacement of output switch and to control and adjust output current for linear or chopped wave voltage; if linear or chopped wave adjustment functions of output gradient voltage do not involve all power units, and tend to be in serialized situation, then said on-off switch can be viewed as necessary to make diverse choice whether it will be disposed or it will be replaced by adding serial switch contact points between solid switch and power unit;
each power unit which is respectively divided into front section and rear section by solid switch has a polar end which directly connects through a diode or switch to two output ends of different polarity, and another polar end of power unit in front and rear section is serialized through diode or switch, that which belongs to the front section is commonly serialized and then guided through diode or its serialized control switch to the directly connected output end of rear section, that which belongs to the front section is commonly serialized and then guided through diode or its serialized control switch to the directly connected output end of front section;
auxiliary switch is serialized to two power connecting enda of solid switch member, when solid switch is in completely conducted situation, the auxiliary switch will close to eliminate voltage drop and thermal loss, this switch is deviced for diverse choice;
CCU unit, input control, set device, voltage and current control device can be used to control said members for the choice of output voltage and current or choice of limit voltage, limit current, constant current, slowly rising, slowly dropping voltage output.
